# EUROPEAN PATENT APPLICATION

(11) **EP 2 763 098 A1**
(43) Date of publication of application: **06.08.2014**
(21) Application number: 14152319.1
(22) Date of filing: 23.01.2014
(51) Int. Cl.: G06Q 30/02

(54) **Information processing system, information processing method and computer-readable storage medium**

(30) Priority: 05.02.2013 JP 2013020769; 05.12.2013 JP 2013252319
(71) Applicant: Ricoh Company Ltd., Tokyo 143-8555 (JP)
(72) Inventor: Watanabe, Osamu, Tokyo 143-8555 (JP)
(74) Representative: Leeming, John Gerard

(57) **Abstract**

An information processing system includes a first acquisition unit (261) configured to acquire pieces of first information for a plurality of services, respectively, each piece of first information containing reduction conditions for reducing a fee for the corresponding service; a second acquisition unit (262) configured to acquire pieces of second information for the services, respectively, each piece of second information indicating a usage of the corresponding service; a determination unit (264) configured to determine whether a value according to the piece of second information corresponding to the service satisfies the reduction conditions for each of the services; and a processor (265) configured to perform a process for reducing the fee for the service on each of the services when the services include a service for which it is determined that the value according to the piece of second information satisfies the reduction conditions.

## Description

The present invention relates to an information processing system, an information processing method, and a computer-readable storage medium.

There is a known conventional technology for acquiring, for each service to which a user has subscribed, information indicating the fee for the service and then calculating the total fee for all the services as the amount the user will be charged.

However, with the conventional technology, there is a problem in that there is no technical mechanism for, for each of multiple services to which a user has subscribed, automatically applying discounts related to other services.

Therefore, there is a need to provide an information processing system, an information processing method, and a computer-readable storage medium for, for each of multiple services to which a user has subscribed, automatically applying discounts related to other services.

It is an object of the present invention to at least partially solve the problems in the conventional technology.

According to an embodiment, there is provided an information processing system that includes a first acquisition unit configured to acquire pieces of first information for a plurality of services, respectively, each piece of first information containing reduction conditions for reducing a fee for the corresponding service; a second acquisition unit configured to acquire pieces of second information for the plurality of services, respectively, each piece of second information indicating a usage of the corresponding service; a determination unit configured to determine whether a value according to the piece of second information corresponding to the service satisfies the reduction conditions for each of the plurality of services; and a processor configured to perform a process for reducing the fee for the service on each of the plurality of services when the plurality of services include a service for which it is determined that the value according to the piece of second information satisfies the reduction conditions.

According to another embodiment, there is provided an information processing method that includes acquiring pieces of first information for a plurality of services, respectively, each piece of first information containing reduction conditions for reducing a fee for the corresponding service; acquiring pieces of second information for the plurality of services, respectively, each piece of second information indicating a usage of the corresponding service; determining whether a value according to the piece of second information corresponding to the service satisfies the reduction conditions for each of the plurality of services; and performing a process for reducing the fee for the service on each of the plurality of services when the plurality of services include a service for which it is determined that the value according to the piece of second information satisfies the reduction conditions.

According to still another embodiment, there is provided a non-transitory computer-readable storage medium with an executable program stored thereon. The program instructs a computer to perform: acquiring pieces of first information for a plurality of services, respectively, each piece of first information containing reduction conditions for reducing a fee for the corresponding service; acquiring pieces of second information for the plurality of services, respectively, each piece of second information indicating a usage of the corresponding service; determining whether a value according to the piece of second information corresponding to the service satisfies the reduction conditions for each of the plurality of services; and performing a process for reducing the fee for the service on each of the plurality of services when the plurality of services include a service for which it is determined that the value according to the piece of second information satisfies the reduction conditions.

The above and other objects, features, advantages and technical and industrial significance of this invention will be better understood by reading the following detailed description of presently preferred embodiments of the invention, when considered in connection with the accompanying drawings; in which:
FIG. 1 is a diagram of an exemplary schematic configuration of an information processing system of a first embodiment;
FIG. 2 a diagram of an exemplary functional configuration of a server device of the first embodiment;
FIG. 3 is a diagram of an exemplary functional configuration of a fee calculator of the first embodiment;
FIG. 4 is a diagram illustrating exemplary specific operations of the server device of a first embodiment;
FIG. 5 is a flowchart of exemplary processes performed by the fee calculator of the first embodiment;
FIG. 6 is a chart illustrating a mode where the fee calculated on the basis of the value according to the usage log is reduced;
FIG. 7 is a chart illustrating a mode where the value according to the usage log is reduced;
FIG. 8 is a diagram of exemplary specific operations of a server device of a second embodiment;
FIG. 9 is a flowchart of exemplary processes performed by a fee calculator of the second embodiment;
FIG. 10 is a diagram of an exemplary schematic configuration of a server device of a modification; and
FIG. 11 is a diagram of an exemplary schematic configuration of an information processing system of the modification.

Embodiments of the information processing system, the information processing method, and the program of the invention will be described in detail below with reference to the accompanying drawings.

### First Embodiment

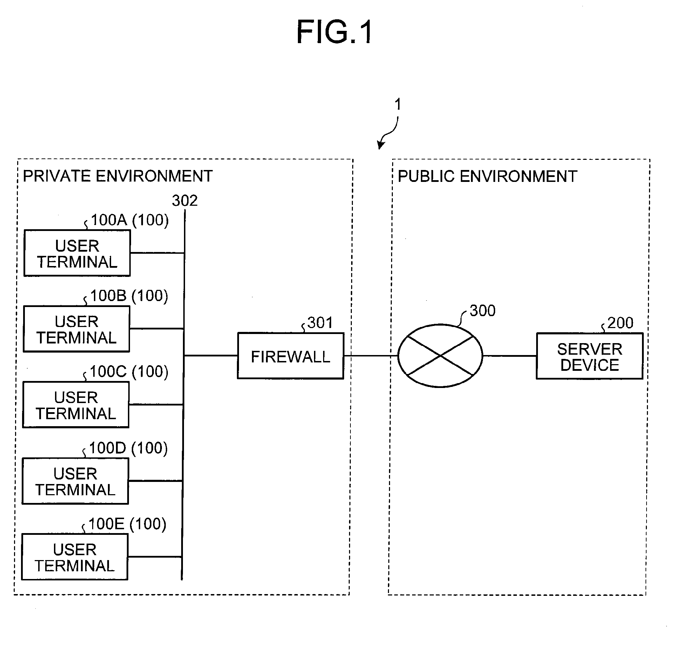

FIG. 1 is a diagram of an exemplary schematic configuration of an information processing system 1 of an embodiment. As shown in FIG. 1, the information processing system 1 includes a user terminal 100 and a server device 200 that can provide various services. The user terminal 100 and the server device 200 are connectable to each other via a network 300 in a public environment, such as the Internet.

More specifically, multiple user terminals 100A to 100E are connected to a network 302 in a private environment, such as an intranet, and the server device 200 is connected to the network 300 in the public environment, such as the Internet. For example, the network 302 in the private environment corresponding to, for example, the intranet of a customer, is connected to the network 300 in the public environment via a firewall 301 so that the user terminals 100A to 100E and the server device 200 are connectable to each other. The crowd environment is an example of a public environment. In the following descriptions, if it is not necessary to distinguish between the user terminals 100A to 100E, it may be simply referred to as "user terminal 100".

A PC, a mobile terminal, an image forming apparatus, a TV conference system, a projector, and an IC recorder are examples of the user terminal 100. A user terminal 100 transmits a service implementation request to the server device 200 so that a service provider 230 of the server device 200, to be described below, performs a given process in association with at least one user terminal 100 as and when necessary to provide a service to the user terminal 100.

The server device 200 may transmit a request to the user terminal 100 depending on the type of service to be provided. However, in a case like that with the information processing system 1, where the network 302 is connected to the network 300 via the firewall 301, a request cannot be transmitted from the server device 200 to the user terminal 100.

Thus, in a case where the network 302 is connected to the network 300 via the firewall 301, a user terminal 100 connected to the network 302 performs polling for the server device 200 so as to receive a request from the server device 200. Furthermore, in the case where the network 302 is connected to the network 300 via the firewall 301, a user terminal 100 connected to the network 302 and the server device 200 can communicate with each other by using the XMPP (Extensible Messaging and Presence Protocol). The XMPP includes a technology referred to as BOSH (Bidirectional-streams Over Synchronous HTTP) for transmitting/receiving a message by HTTP. Using BOSH allows the server device 200 to implement the Push function (a function not for receiving a request from a user terminal 100 but for asynchronously transmitting a request from the server device 200 to an electric device).

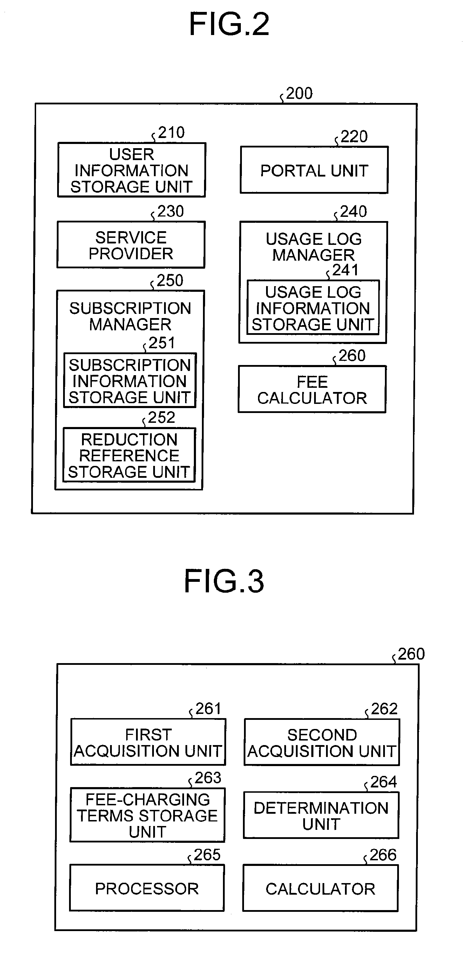

FIG. 2 is a block diagram of an exemplary functional configuration of the server device 200. As shown in FIG. 2, the server device 200 includes a user information storage unit 210, a portal unit 220, the service provider 230, a usage log manager 240, a subscription manager 250, and a fee calculator 260.

The user information storage unit 210 stores information with which a user who was previously registered as a user to whom the service is provided can be specified. For example, the user information storage unit 210 stores information, such as a user ID that identifies the user and a password, for each user name. The user ID may be, for example, a device ID that identifies a device for providing the service (device used by the user to receive the service).

The portal unit 220 functions as a portal (gate) for providing services to each user terminal 100. Upon receiving a service request for implementing a service from a user terminal 100, the portal unit 220 authenticates the user terminal 100. The service request transmitted from the user terminal 100 contains a user ID used to identifying the user who uses the user terminal 100 and a service ID used to identify the requested service. For example, a service request for provision of a TV conference system (hereinafter, referred to as a "first service") may contain a device ID (corresponding to the user ID) that identifies a TV conference terminal (an example of the user terminal 100) used by the user who requests the first service, a service ID that identifies the first service, and connection destination information that specifies the connection destination.

Upon receiving a service request transmitted from the user terminal 100, the portal unit 220 determines whether the user IDs previously registered in the user information storage unit 210 include the user ID that is contained in the received user request. When the user IDs previously registered in the user information storage unit 210 include the user ID that is contained in the received user request, the portal unit 220 authenticates the user terminal 100 that has transmitted the service request (determines that the user terminal is authorized to receive the service). If the user terminal 100 is authenticated, the portal unit 220 passes the received service request to the service provider 230.

The service provider 230 has a function of providing (implementing) a service in accordance with the service request passed from the portal unit 220. For example, when a service request passed from the portal unit 220 is a request for the first service, the service provider 230 performs a process for connecting the user terminal 100 (a TV conference terminal in this case) identified by the device ID contained in the service request to another device specified by the connection destination information contained in the service request. The service provider 230 outputs, at a given cycle and to the usage log manager 240, usage log information that contains the usage log indicating the service usage (in the above case, the time of connection with the partner of the TV conference), the user ID that identifies the user to whom the service will be provided (in the above case, the device ID that identifies the user terminal 100 as having requested the first service), and the service ID that identifies the provided service (in the above case, the first service). The usage log manager 240 manages the usage log information that is sequentially output from the service provider 230 in chronological order.

The usage log manager 240 has a function of registering the usage log information, which is passed from the service provider 230, in a usage log information storage unit 241 and managing the usage log information storage unit 241. As described below, the usage log manager has a function of, in response to a request from the fee calculator 260, specifying the usage log corresponding to the combination of the service ID and the user ID in the usage log information storage unit 241 and of transmitting the specified usage log to the fee calculator 260.

A usage log can be considered to be information on the usage of the service that is output, for fee charging, each service ID that identifies a provided service. The usage log may indicate the time at which the service was used or the amount of usage of the service.

The subscription manager 250 has a function of managing the user ID, the service IDs of multiple services to which the user has subscribed, the subscription terms (conditions) (i.e. information indicating, for example, the length of the subscription and the unit time period corresponding to the time period for which a fee is charged, etc.), etc., in association with each other for each of the users previously registered as users to whom services can be provided. The subscription manager 250 also has a function of managing a reduction reference storage unit 252 that stores, in association with each other, for each of the services that the server device 200 can provide, reduction terms for reducing the fee for the service (discounting terms) and reduction information indicating how to reduce the fee when the reduction terms are satisfied. Although the details will be described below, in the embodiment, for each service, the reduction terms for the service are that a given threshold is exceeded by the value according to the usage log for the service for the unit time period corresponding to the time period for which a fee is charged.

In this example, when it is determined that it is time to charge the fee to a user in accordance with the subscription terms associated with the user registered in a subscription information storage unit 251, the subscription manager 250 specifies the service IDs associated with the user (service IDs identifying the respective services to which the user has subscribed). The subscription manager 250 refers to the reduction reference storage unit 252 to specify the reduction terms and the reduction methods corresponding to the respective service IDs associated with the user to which the fee will be charged. The subscription manager 250 then, for each of the multiple services to which the user has subscribed and to which the fee will be charged, creates a calculation instruction file for giving an instruction to calculate the fee of the service and transmits the created calculation instruction file to the fee calculator 260. Each calculation instruction file contains the service ID of the target service, the user ID of the target user, the reduction terms, and the reduction information. Each calculation instruction file may contain information (time information) that can specify the unit time period for which the current fee will be charged.

The fee calculator 260 has a function of calculating the fee for the service provided to the user in response to a request from the subscription manager 250. The details will be given below.

FIG. 3 is a diagram of an exemplary detailed configuration of the fee calculator 260. As shown in FIG. 3, the fee calculator 260 includes a first acquisition unit 261, a second acquisition unit 262, a fee-charging terms storage unit 263, a determination unit 264, a processor 265, and a calculator 266.

The first acquisition unit 261 acquires, for each of the multiple services to which the user has subscribed, first information that contains the reduction terms for reducing the fee for the service. In the embodiment, the first information contains reduction information indicating how to reduce the fee when the reduction terms are satisfied. In this example, the calculation instruction file transmitted from the subscription manager 250 corresponds to "first information", but this does not limit the embodiments.

The second acquisition unit 262 acquires second information indicating the service usage for each of the multiple services to which the user has subscribed. In the embodiment, the second acquisition unit 262 specifies the service ID and the user ID that are contained in each calculation instruction file acquired by the first acquisition unit 261, requests, from the usage log manager 240, the usage log for the unit time period for which the current fee will be charged from among the usage log corresponding to the combination of the specified service ID and user ID, and receives (acquires) the requested usage log. In this example, the usage log transmitted from the usage log manager 240 corresponds to "second information", but this does not limit embodiments. The second acquisition unit 262 can specify the unit time period for which the current fee will be charged in accordance with the time information contained in the calculation instruction file acquired by the first acquisition unit 261.

The fee-charging terms storage unit 263 stores, for each service that can be provided by the server device 200, fee-charging terms indicating the minimum unit charge. For example, for the above-described first service, the service ID indentifying the first service and fee-charging terms that the fee will not be charged for a connection time less than three minutes are stored in association with each other.

The determination unit 264 determines, for each of the multiple services to which the user has subscribed, whether the value according to the second information corresponding to the service satisfies the reduction terms contained in the first information corresponding to the service. In the embodiment, the determination unit 264 determines, for each calculation instruction file acquired by the first acquisition unit 261, whether the value according to the usage log corresponding to the service identified by the service ID contained in the calculation instruction file, which is the usage log acquired by the second acquisition unit 262, satisfies the reduction terms contained in the calculation instruction file. More specifically, the determination unit 264 reads, for each calculation instruction file acquired by the first acquisition unit 261, the fee-charging terms corresponding to the service ID contained in the calculation instruction file from the fee-charging terms storage unit 263, specifies the log for which the fee will be charged (referred to as "fee-charging log" below as and when necessary) from among the usage log acquired by the second acquisition unit 262 (usage log corresponding to the service identified by the service ID contained in the calculation instruction file) in accordance with the read fee-charging terms, and determines whether the value according to the specified fee-charging log (broadly, the value according to the usage log) satisfies the reduction terms contained in the calculation instruction file.

If the multiple services to which the user has subscribed includes a service for which it has been determined that the value according to the fee-charging log (exemplary second information) satisfies the reduction terms, the processor 265 performs a process for reducing the fee for the service for each of the multiple services to which the user has subscribed. In the embodiment, if the multiple services to which the user has subscribed include a service for which it has been determined that the fee-charging log satisfies the reduction terms, the processor 265 performs, for each of the multiple services to which the user has subscribed, a process for reducing the value according to the usage log corresponding to the service. More specifically, the processor 265 performs, for each of the multiple services to which the user has subscribed, the process for reducing the value according to the usage log corresponding to the service (an example for reducing the fee) in accordance with the reduction information corresponding to the service for which it has been determined that the value according to the fee-charging log satisfies the reduction terms.

The calculator 266 calculates, for each of the multiple services to which the user has subscribed, the fee for the service on the basis of the process performed by the processor 265. In the embodiment, the calculator 266 calculates, for each of the multiple services to which the user has subscribed, the fee for the service in accordance with the value according to the usage log corresponding to the service on which the process has been performed by the processor 265 and a pre-determined unit price and determines the total fees for the services as the amount the user will be charged.

In the embodiment, the hardware configuration of a computer device including a CPU, a ROM, a RAM, etc. is used for the hardware configuration of the server device 200. The function of each unit of the server device 200 (the portal unit 220, the service provider 230, the usage log manager 240, the subscription manager 250, and the fee calculator 260 (the first acquisition unit 261, the second acquisition unit 262, the determination unit 264, the processor 265, and the calculator 266)) is implemented by the CPU by reading a program stored in the ROM, etc. and loading it to the RAM. Alternatively, for example, the functions of the units of the server device 200 may be partly implemented using a dedicated hardware circuit. Each of the above-described usage log information storage unit 241, the subscription information storage unit 251, the reduction reference storage unit 252, and the fee-charging terms storage unit 263 can be implemented by using the ROM, RAM or an auxiliary storage device such as an HDD.

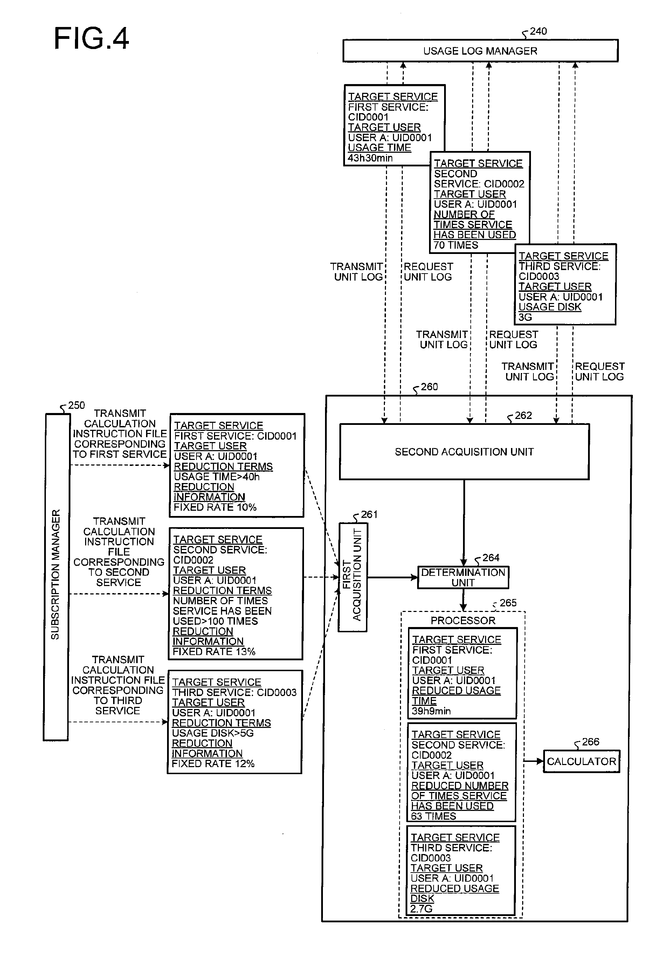

Here, a case where the fee for January for User A having subscribed to three services (a first service, a second service, and a third service) (the fee for the services) is calculated will be taken as a specific example (see FIG. 4). Upon determining that it is time to charge the fee in accordance with the subscription terms corresponding to User A (the user ID that identifies User A) from among multiple sets of subscription terms registered in the subscription information storage unit 251 (not shown), the subscription manager 250 specifies multiple service IDs associated with User A from among the multiple service IDs registered in the subscription information storage unit 251. The subscription manager 250 refers to the reduction reference storage unit 252 (not shown) to specify the reduction terms and the reduction methods corresponding to each of the multiple service IDs associated with User A. The subscription manager 250 creates, for each of the multiple service IDs associated with User A, a calculation instruction file for issuing an instruction for calculating the fee of the service identified by the service ID and transmits the created calculation instruction files to the fee calculator 260.

As shown in FIG. 4, the subscription manager 250 separately creates a calculation file corresponding to the first service, a calculation file corresponding to the second service, and a calculation file corresponding to the third service, and transmits the calculation files to the fee calculator 260. The calculation instruction file corresponding to the first service contains a service ID (CID0001) indicating that the target service is the "first service", a user ID (UID0001) indicating that the target user is "User A", information indicating the reduction terms corresponding to the first service, and reduction information corresponding to the first service. According to the example of FIG. 4, the reduction terms corresponding to the first service are that the usage time exceeds forty hours and the reduction information corresponding to the first service indicates that the value according to the usage log (the usage log for January in this example) for the unit time period for which the current fee will be charged will be reduced by 10%.

As shown in FIG. 4, the calculation instruction file corresponding to the second service contains a service ID (CID0002) indicating that the target service is the "second service", a user ID (UID0001) indicating that the target user is "User A", information indicating the reduction terms corresponding to the second service, and reduction information corresponding to the second service. According to the example of FIG. 4, a service, such as cloud printing, is assumed as the second service, where the reduction terms corresponding to the second service are that the number of times the service has been used (the number of prints) exceeds 100 and the reduction information corresponding to the second service indicates that the value according to the usage log for the unit time period for which the fee will be charged is reduced by 13%.

As shown in FIG. 4, the calculation instruction file corresponding to the third service contains a service ID (CID0003) indicating that the target service is the "third service", a user ID (UID0001) indicating that the target user is "User A", information indicating the reduction terms corresponding to the third service, and reduction information corresponding to the third service. According to the example of FIG. 4, a service on the server or a service using a storage connected to the server is assumed as the third service, where the reduction terms corresponding to the third service are that the usage DISK indicating the volume of storage that has been used exceeds 5G, and the reduction information corresponding to the third service indicates that the value according to the usage log for the unit time period for which the fee will be charged is reduced by 12%. The calculation instruction file corresponding to each service may contain information (time information) that can specify the unit time period for with which the current fee will be charged.

The first acquisition unit 261 of the fee calculator 260 receives (acquires) the calculation instruction file corresponding to the first service, the calculation instruction file corresponding to the second service, and the calculation instruction file corresponding to the third service that are transmitted from the subscription manager 250.

The second acquisition unit 262 of the fee calculator 260 requests, for each of the calculation instruction files acquired by the first acquisition unit 261, the usage log corresponding to the combination of the service ID and the user ID contained in the calculation instruction file from the usage log manager 240. The details will be given below.

The second acquisition unit 262 requests, from the usage log manager 240, the usage log for a time period for which the current fee will be charged from among the usage log corresponding to the combination of the service ID (CID0001) and the user ID (UID0001) that are contained in the calculation instruction file corresponding to the first service, which is the calculation instruction file acquired by the first acquisition unit 261. The usage log manager 240 that has received the request specifies the usage log for the unit time period for which the current fee will be charged from among the usage log corresponding to the combination of the service ID (CID0001) that identifies the first service and the user ID (UID0001) that identifies User A and transmits, to the second acquisition unit 262, a file where the specified usage log (in the example of FIG. 4, information indicating that the time for which the service has been used is 43 hours and 30 minutes), the service ID that identifies the first service, and the user ID that identifies User A are associated with each other. Accordingly, the second acquisition unit 262 can acquire the usage log corresponding to the first service for which the current fee will be calculated.

The second acquisition unit 262 requests, from the usage log manager 240, the usage log for the time period for the current fee will be charged from among the usage log corresponding to the combination of the service ID (CID0002) and the user ID (UID0001) that are contained in the calculation instruction file corresponding to the second service, which is the calculation instruction file acquired by the first acquisition unit 261. The usage log manager 240 that has received the request specifies the usage log for the time period for the current fee will be charged from among the usage log corresponding to the combination of the service ID (CID0002) that identifies the second service and the user ID (UID0001) that identifies User A and transmits, to the second acquisition unit 262, a file where the specified usage log (in the example of FIG. 4, information indicating that the number of times the service has been used is "70"), the service ID that identifies the second service, and the user ID that identifies User A. Accordingly, the second acquisition unit 262 can acquire the usage log corresponding to the second service for which the current fee will be calculated.

The second acquisition unit 262 requests, from the usage log manager 240, for the usage log for the unit time period for which the current fee will be charged from among the usage log corresponding to the combination of the service ID (CID0003) and the user ID (UID0001) that are contained in the calculation instruction file corresponding to the third service, which is the calculation instruction file acquired by the first acquisition unit 261. The usage log manager 240 that has received the request specifies the usage log for the unit time period for which the current fee will be charged from among the usage log corresponding to the combination of the service ID (CID0003) that identifies the third service and the user ID (UID0001) that identifies User A and transmits, to the second acquisition unit 262, a file where the specified usage log (in the example of FIG. 4, information indicating that the usage DISK is "3 gigabyte"), the service ID that identifies the third service, and the user ID that identifies User A are associated with each other. Accordingly, the second acquisition unit 262 can acquire the usage log corresponding to the third service for which the current fee will be charged.

The determination unit 264 then reads, for each of the calculation instruction files acquired from the first acquisition unit 261, the fee-charging terms corresponding to the service ID contained in the calculation instruction file from the fee-charging terms storage unit 263 (not shown in FIG. 4), specifies the fee-charging log from among the usage log acquired by the second acquisition unit 262 in accordance with the read fee-charging terms, and determines whether the value according to the specified fee-charging log satisfies the reduction terms contained in the calculation instruction file. The details will be given below.

The determination unit 264 reads, from the fee-charging terms storage unit 263, the fee-charging terms corresponding to the service ID (the service ID that identifies the first service) contained in the calculation instruction file corresponding to the first service, which is the calculation instruction file acquired by the first acquisition unit 261, and specifies a fee-charging log from among the usage log corresponding to the first service, which is the usage log acquired by the second acquisition unit 262, in accordance with the read fee-charging terms. In this example, fee-charging terms corresponding to the service ID that identifies the first service indicates that a fee will not be charged for a connection time (usage time) less than three minutes, while the usage log corresponding to the first service indicates, which is the usage log acquired by the second acquisition unit 262, indicates that the usage time is "43 hours and 30 minutes". Thus, the determination unit 264 specifies the usage log corresponding to the first service, which is the usage log acquired by the second acquisition unit 262, as the fee-charging log corresponding to the first service and then determines whether the value according to the specified fee-charging log satisfies the reduction terms contained in the calculation instruction file corresponding to the first service, which is the calculation instruction file acquired by the first acquisition unit 261. In this example, the value according to the fee-charging log corresponding to the first service is "43 hours and 30 minutes" and the reduction terms contained in the calculation instruction file corresponding to the first service is that the usage time exceeds 40 hours, and accordingly the determination unit 264 determines that the value according to the fee-charging log corresponding to the first service satisfies the reduction terms.

The determination unit 264 reads, from the fee-charging terms storage unit 263, the fee-charging terms corresponding to the service ID (the service ID that identifies the second service) contained in the calculation instruction file corresponding to the second service, which is the calculation instruction file acquired by the first acquisition unit 261, and specifies the fee-charging log from among the usage log corresponding to the second service, which is the usage log acquired by the second acquisition unit 262, in accordance with the read fee-charging terms. Here, as an example, the fee-charging terms corresponding to the service ID that identifies the second service indicates that a fee will not be charged when the number of times the service has been used is less than three times. In the example of FIG, the usage log corresponding to the second service, which is the usage log acquired by the second acquisition unit 262, indicates that the number of times the service has been used is "70 times" and thus the determination unit 264 specifies the usage log corresponding to the second service, which is the usage log acquired by the second acquisition unit 262, as the fee-charging log corresponding to the second service. The determination unit 264 then determines whether the value according to the specified fee-charging log satisfies the reduction terms contained in the calculation instruction file corresponding to the second service, which is the calculation instruction file acquired by the first acquisition unit 261. In this example, because the value according to the fee-charging log corresponding to the second service is "70 times" and the reduction terms contained in the calculation instruction file corresponding to the second service is that the number of times the service has been used exceeds 100 times, the determination unit 264 determines that the value according to the fee-charging log corresponding to the second service does not satisfy the reduction terms.

The determination unit 264 reads, from the fee-charging terms storage unit 263, the fee-charging terms corresponding to the service ID (the service ID that identifies the third service) contained in the calculation instruction file corresponding to the third service, which is the calculation instruction file acquired by the first acquisition unit 261, and specifies the fee-charging log from among the usage log corresponding to the third service, which is the usage log acquired by the second acquisition unit 262, in accordance with the read fee-charging terms. Here, as an example, the fee-charging terms corresponding to the service ID that identifies the third service indicates that a fee will not be charged when the usage DISK is less than 5 megabyte. In the example of FIG. 4, the usage log corresponding to the third service, which is the usage log acquired by the second acquisition unit 262, indicate that the usage DISK is "3 gigabytes" and thus the determination unit 264 specifies the usage log corresponding to the third service, which is the usage log acquired by the second acquisition unit, as the fee-charging log corresponding to the third service. The determination unit 264 then determines whether the value according to the specified fee-charging log satisfies the reduction terms contained in the calculation instruction file corresponding to the third service, which is the calculation instruction file acquired by the first acquisition unit 261. In the example, because the value according to the fee-charging log corresponding to the third service is "3 gigabyte" and the reduction terms contained in the calculation instruction file corresponding to the third service is that the usage DISK exceeds 5 gigabyte, the determination unit 264 determines that the value according to the fee-charging log corresponding to the third service does not satisfy the reduction terms.

When the three types of services (the first service, the second service, and the third service) include a service for which it has been determined that the value according to the fee-charging log (usage log) satisfies the reduction terms, the processor 265 performs, for each of the three types of services to which User A has subscribed, a process for reducing the value according to the usage log corresponding to the service. In the example of FIG. 4, because the value according to the fee-charging log corresponding to the first service satisfies the reduction terms corresponding to the first service, the processor 265 performs, for each of the three types of services to which User A has subscribed, a process (reduction process) for reducing the value according to the usage log corresponding to the service. More specifically, the processor 265 performs, for each of the multiple services to which User A has subscribed, a process for reducing the value according to the usage log corresponding to the service in accordance with the reduction information contained in the calculation instruction file corresponding to the first service.

In the example of FIG. 4, the reduction information contained in the calculation instruction file corresponding to the first service indicates that the value according to the usage log is reduced by 10%, and thus the processor 265 performs a process for reducing, by 10%, the value according to the usage log corresponding to the first service, which is the usage log acquired by the second acquisition unit 262. Accordingly, the value according to the usage log corresponding to the first service (reduced usage time), which is the value used to calculate the current fee, is "39 hours and 9 minutes". The processor 265 also performs a process for reducing, by 10%, the value according to the usage log corresponding to the second service, which is the usage log acquired by the second acquisition unit 262. Accordingly, the value (the reduced number of times the service has been used) according to the usage log corresponding to the second service, which is the value used to calculate the current fee, is "63". Furthermore, the processor 265 also performs a process for reducing, by 10%, the value according to the usage log corresponding to the third service, which is the usage log acquired by the second acquisition unit 262. Accordingly, the value (the reduced usage DISK) according to the usage log corresponding to the third service, which is the value used to calculate the current fee, is "2.7 gigabyte".

For example, the processor 265 can perform, for each of the multiple services to which the user has subscribed, a process for increasing the volume by which the fee for the service is reduced in accordance with an increase in the number of services, among the multiple services to which the user has subscribed, for which the value according to the second information satisfies the reduction terms. In the example of FIG. 4, only the fee-charging log (usage log) for the first service satisfies the reduction terms from among those for the first service, the second service, and the third service, but, for example, a case can be assumed where, meanwhile the reduction terms are satisfied for the first service, the value according to the fee-charging log corresponding to the second service satisfies the reduction terms corresponding to the second service.

In this case, for the value according to the usage log corresponding to each service, which is the usage log acquired by the second acquisition unit 262, the processor 265 may, after applying a reduction in accordance with reduction information corresponding the first service (information indicating that the value according to the usage log is reduced by 10%), apply reduction in accordance with the reduction information corresponding to the second service (information indicating that the value according to the usage log is reduced by 13%). In an example of reducing the value according to the usage log corresponding to the first service, the processor 265 performs a process for reducing, by 10%, the value according to the usage log corresponding to the first service, which is the usage log acquired by the second acquisition unit 262, and then performs a process for further reducing the reduced value by 13%. For the value according to the usage log corresponding to each service, the processor 265 can, after applying a reduction in accordance with the reduction information corresponding to the second service, apply reduction in accordance with the reduction information corresponding to the first service.

In the embodiment, when the multiple services to which the user has subscribed includes a service for which it has been determined that the value according to the fee-charging log (usage log) satisfies the reduction terms, the processor 265 performs, for each of the multiple services to which the user has subscribed, a process for reducing the value according to the usage log corresponding to the service in accordance with the reduction information corresponding to the service for which it has been determined that the fee-charging log satisfies the reduction terms, but the method of reducing the value according to the usage log corresponding to each service is not limited and is arbitrary. For example, a pre-set fixed value may be subtracted from the value according to the usage log corresponding to a service for which the value according to the fee-charging log does not satisfy the reduction terms.

The calculator 266 then calculates, for each of the three types of services to which the user has subscribed (the first service, the second service, and the third service), the fee for the service in accordance with the value according to the usage log corresponding to the service, which is the value having been reduced by the processor 265, and a pre-determined unit price and determines the total of all the calculated fees for the services as the amount the user will be charged.

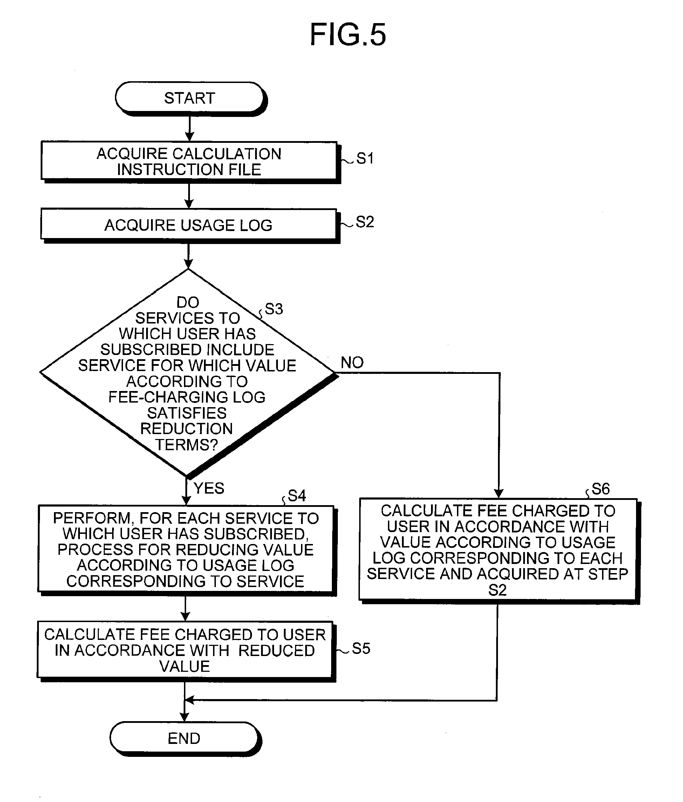

FIG. 5 is a flowchart of exemplary processes performed by the fee calculator 260. As shown in FIG. 5, the first acquisition unit 261 acquires, for each of multiple services to which a user has subscribed, a calculation instruction file corresponding to the service (step S1). The second acquisition unit 262 then specifies, for each of the calculation instruction files acquired by the first acquisition unit 261, the service ID and the user ID contained in the calculation instruction file and requests, from the usage log manager 240, the usage log for a unit time period for which the current fee will be charged from among the usage log corresponding to the combination of the specified service ID and user ID. The second acquisition unit 262 acquires (receives) the requested usage log from the usage log manager 240 (step S2).

The determination unit 264 then reads, for each of the calculation instruction files acquired by the first acquisition unit 261, the fee-charging terms corresponding to the service ID contained in the calculation instruction file from the fee-charging terms storage unit 263, specifies, in accordance with the read fee-charging terms, the fee-charging log from among the usage log acquired by the second acquisition unit 262, and determines whether the value according to the specified fee-charging log satisfies the reduction terms contained in the calculation instruction file. When the multiple services to which the user has subscribed includes a service for which it has been determined that the value according to the fee-charging log (usage log) satisfies the reduction terms (YES at step S3), the processor 265 performs, for each of the multiple services to which the user has subscribed, a process for reducing the value according to the usage log corresponding to the service (step S4). In accordance with the value that has been reduced by the processor 265, the calculator 266 then calculates the fee charged to the user (step S5).

In contrast, when the multiple services to which the user has subscribed does not include a service for which it has been determined that the value according to the fee-charging log satisfies the reduction terms (NO at step S3), the processor 265 does not perform a process for reducing the value according to the usage log for each of the multiple services to which the user has subscribed and passes the usage logs corresponding to the respective services, which are the usage logs acquired by the second acquisition unit 262, to the calculator 266. The calculator 266 then calculates the fee charged to the user, in accordance with the usage logs corresponding to the respective services, which are the usage logs passed by the processor 265, i.e., in accordance with the values according to the usage logs corresponding to the respective services acquired at step S2 (step S6).

As described above, in the embodiment, when multiple services to which a user has subscribed include a service for which it has been determined that the usage log (an example of second information) corresponding to the service satisfies the reduction terms corresponding to the service, a process for reducing the fee for the service is performed for each of the multiple services to which the user has subscribed and thus, for each of the multiple services to which the user has subscribed, a discount related to other services can be automatically applied.

As described above, in the embodiment, when multiple services to which a user has subscribed include a service for which it has been determined that the usage log corresponding to the service satisfies the reduction terms corresponding to the service, a process for reducing the value according to the usage log corresponding to the service is performed for each of the multiple services to which the user has subscribed, which is advantageous in that the service provider (the server device 200) can provide a variety of fees to users to whom the services are provided while the user can receive more discounts depending on the usage mode.

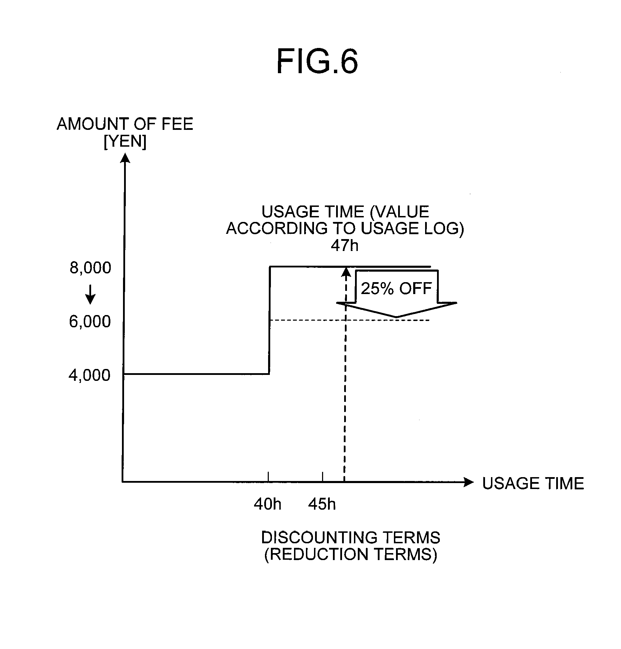

For example, the mode illustrated in FIG. 6 will be assumed where the fee-charging system for the first service is a staged double fixed-fee system where the fee for the first service is across-the-board "4000 yen" when the usage time is less than 40 hours while the fee for the first service is across-the-board "8000 yen" when the usage time is 40 hours or more. The example of FIG. 6, premises that the reduction terms corresponding to the first service is that the usage time exceeds 45 hours and the reduction information corresponding to the first service indicates that the fee calculated in accordance with the value according to the usage log (the usage log acquired by the second acquisition unit 262) is reduced by 25%.

A case will be assumed where, as shown in FIG. 6, the value according to the usage log corresponding to the first service, which is the usage log acquired by the second acquisition unit 262, is "47 hours". In this case, because the value corresponding to the usage log (usage time) is 40 hours or more, the corresponding fee is 8000 yen. Furthermore, the value corresponding to the usage log (usage time) exceeds 45 hours, which satisfies the reduction terms corresponding to the first service. Accordingly, the fee charged to the user is calculated as 8000 x 0.75 = 6000 yen.

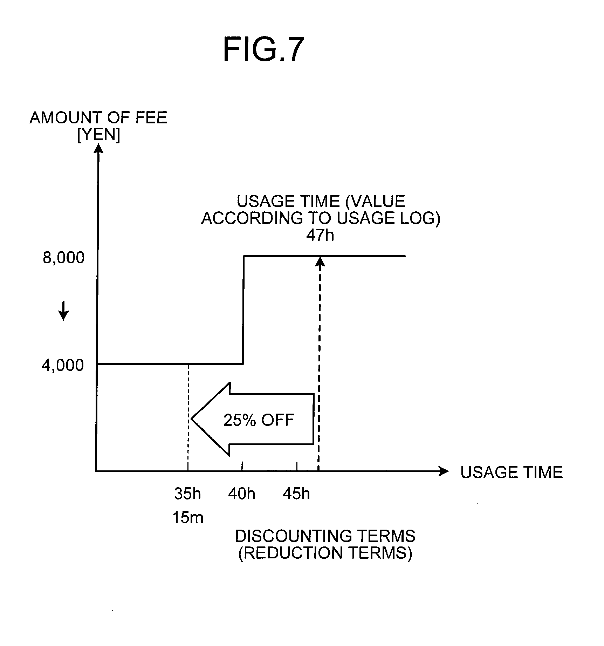

In contrast, a case will be assumed where the reduction information corresponding to the first service indicates that the value according to the usage log (the usage log acquired by the second acquisition unit 262) is reduced by 25%. Now, a case will be assumed where, as illustrated in FIG. 7, the value according to the usage log corresponding to the first service, which is the usage log acquired by the second acquisition unit 262, is "47 hours". In this case, the value corresponding to the usage log (usage time) exceeds 45 hours, which satisfies the reduction terms corresponding to the first service. Accordingly, the reduced value according to the usage log corresponding to the first service is represented by 47 x 0.75 = 35.25 hours (35 hours and 15 minutes), i.e., less than 40 hours, and accordingly the fee charged to the user is calculated as 4000 yen. In other words, in this service usage mode, when the reduction terms corresponding to the service are satisfied, the user can have more discounts using the system where the value according to the usage log corresponding to the service is reduced.

However, the process for reducing, for each of multiple services to which a user has subscribed, the fee for the service is not limited to the process for reducing the value according to the usage log corresponding to the service according to the above-described embodiment. For example, a process may be used where, as shown in FIG. 6, the fee calculated in accordance with the value according to the usage log corresponding to the service (the fee for the service) is reduced.

### Second Embodiment

A second embodiment will be described below. The second embodiment is different from the first embodiment in that the reduction terms corresponding to each service is that the value according to the usage log (here, "cumulative log") corresponding to the service for a past certain time period exceeds a given threshold. The details will be given below. The common part between the first and second embodiments will be omitted as and when necessary.

The basis configuration of the information processing system according to the second embodiment is the same as that of the first embodiment and thus the detailed descriptions will be omitted. As in the case of the first embodiment, the reduction reference storage unit 252 stores, for each service that the server device 200 can provide, reduction terms and reduction information in association with each other, but the second embodiment is different from the first embodiment in that terms indicating that the value according to the cumulative log exceeds a given threshold are set for the reduction terms stored in the reduction reference storage unit 252. Alternatively, for example, a mode may be employed where both of first reduction terms indicating that a given threshold is exceeded by the value according to the usage log (fee-charging log) for the service for the unit time period corresponding to the time period for which a fee is charged to the user (the reduction terms of the first embodiment) and second reduction terms indicating that the value according to the cumulative log exceeds a given threshold (the reduction terms of the second embodiment) are set for the reduction terms corresponding to each service. Furthermore, first reduction information corresponding to the first reduction terms and second reduction information corresponding to the second reduction terms may be set for the reduction information corresponding to each service.

The basic functions of the subscription manager 250 and the first acquisition unit 261 are the same as those of the first embodiment. The second acquisition unit 262 specifies, for each of the calculation instruction files acquired by the first acquisition unit 261, the service ID and the user ID contained in the calculation instruction file, requests, from the usage log manager 240, a usage log for a unit time period for which the current fee will be charged (hereinafter, "unit log" as a matter of convenience) and a cumulative log (including the unit log) indicating the usage for a certain past time period indicated by the reduction terms contained in the calculation instruction file from among the usage log corresponding to the combination of the specified service ID and user ID, and receives (acquires) the requested unit log and the cumulative log from the usage log manager 240.

In the second embodiment, the determination unit 264 determines, for each of the calculation instruction files acquired by the first acquisition unit 261, whether the value according to the cumulative log corresponding to the service identified by the service ID contained in the calculation instruction file, which is the usage log acquired by the second acquisition unit 262, satisfies the reduction terms contained in the calculation instruction file.

Furthermore, in the second embodiment, if the multiple services to which the user has subscribed include a service for which it has been determined that the value according to the cumulative log satisfies the reduction terms, the processor 265 performs, for each of the multiple services to which the user has subscribed, a process for reducing the fee for the service. More specifically, the processor 265 performs, for each of the multiple services to which the user has subscribed, a process for reducing the value according to the unit log corresponding to the service. More specifically, the processor 265 performs, for each of the multiple services to which the user has subscribed, a process for reducing the value according to the unit log corresponding to the service in accordance with reduction information corresponding to the service for which it has been determined that the value according to the cumulative log satisfies the reduction terms (an exemplary process for reducing the fee).

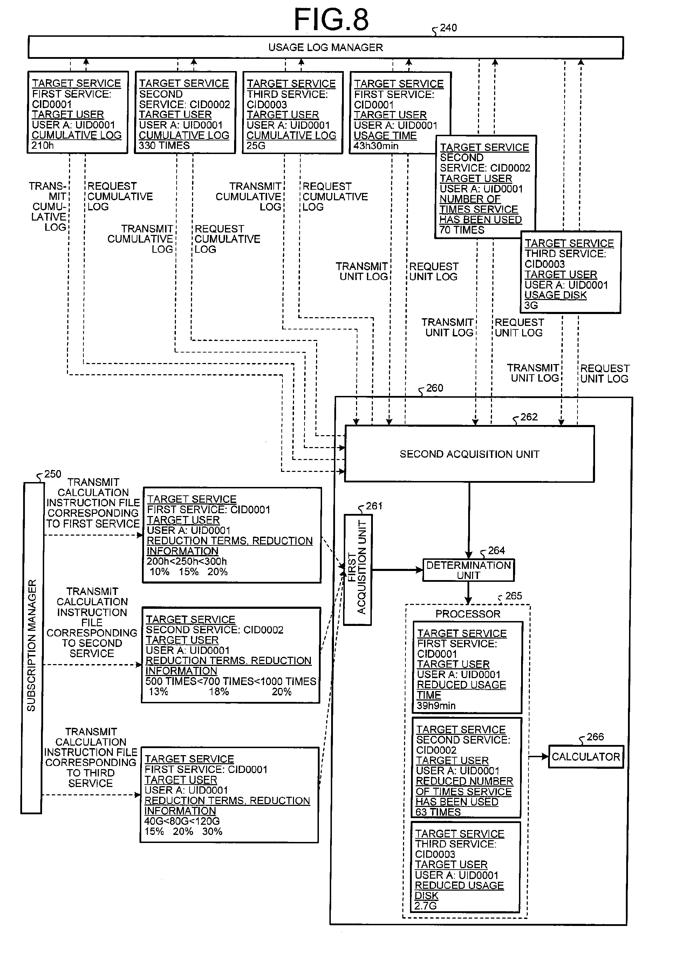

Here, a case will be assumed, as a specific example, where the fee for January (an exemplary unit time period indicating the time period for which a fee is charged) that is charged to User A who have subscribed three services (a first service, a second service, and a third service) is calculated (see FIG. 8). As in the case of FIG. 4, first, the subscription manager 250 separately creates a calculation file corresponding to the first service, a calculation file corresponding to the second service, and a calculation file corresponding to the third service, and transmits the calculation files to the fee calculator 260.

As shown in FIG. 8, the calculation instruction file corresponding to the first service contains a service ID (CID0001) indicating that the target service is the "first service", a user ID (UID0001) indicating that the target user is "User A", information indicating the reduction terms corresponding to the first service, and reduction information corresponding to the first service. In the example of FIG. 8, the reduction terms corresponding to the first service are set in three stages: a first-staged reduction terms indicating that the cumulative usage time for a past month N (N is an arbitrary integer) exceeds 200 hours, a second-staged reduction terms indicating that the cumulative usage time exceeds 250 hours, and a third-staged reduction terms indicating that the cumulative usage time exceeds 300 hours. The reduction information corresponding to the first service contains information indicating that the value according to the unit log is reduced by 10% when the first-staged reduction terms are satisfied, information indicating that the value according to the unit log is reduced by 15% when the second-staged reduction terms are satisfied, and information indicating that the value according to the unit log is reduced by 20% when the third-staged reduction terms are satisfied.

As shown in FIG. 8, the calculation instruction file corresponding to the second service contains a service ID (CID0002) indicating that the target service is the "second service", a user ID (UID0001) indicating that the target user is "User A", information indicating the reduction terms corresponding to the second service, and reduction information corresponding to the second service. In the example of FIG. 8, the reduction terms corresponding to the second service are set in three stages: a first-staged reduction terms indicating that the cumulative number of times the service has been used for the past month N exceeds 500 times, a second-staged reduction terms indicating that the cumulative number of times the service has been used exceeds 700 times, and a third-staged reduction terms indicating that the cumulative number of times the service has been used exceeds 1000 times. The reduction information corresponding to the second service contains information indicating that the value according to the unit log is reduced by 13% when the first-staged reduction terms are satisfied, information indicating that the value according to the unit log is reduced by 18% when the second-staged reduction terms are satisfied, and information indicating that the value according to the unit log is reduced by 20% when the third-staged reduction terms are satisfied.

Furthermore, as shown in FIG. 8, the calculation instruction file corresponding to the third service contains a service ID (CID0003) indicating that the target service is the "third service", a user ID (UID0001) indicating that the target user is "User A", information indicating the reduction terms corresponding to the third service, and reduction information corresponding to the third service. In the example of FIG. 8, the reduction terms corresponding to the third service are set in three stages: a first-staged reduction terms indicating that the cumulative usage DISK for the past month N exceeds 40 gigabyte, a second-staged reduction terms indicating that the cumulative usage DISK exceeds 80 gigabyte, and a third-staged reduction terms indicating that the cumulative usage DISK exceeds 120 gigabyte. The reduction information corresponding to the third service contains information indicating that the value according to the unit log is reduced by 15% when the first-staged reduction terms are satisfied, information indicating that the value according to the unit log is reduced by 20% when the second-staged reduction terms are satisfied, and information indicating that the value according to the unit log is reduced by 30% when the third-staged reduction terms are satisfied. Similar to the case of FIG. 4, the calculation instruction file corresponding to each service may contain information (time information) that can specify the unit time period for which the current fee will be charged.

The first acquisition unit 261 of the fee calculator 260 receives (acquires) the calculation instruction file corresponding to the first service, the calculation instruction file corresponding to the second service, and the calculation instruction file corresponding to the third service that are transmitted from the subscription manager 250. For each of the calculation instruction files acquired from the first acquisition unit 261, the second acquisition unit 262 of the fee calculator 260 requests, from the usage log manager 240, the unit log and the cumulative log corresponding to the combination of the service ID and the user ID contained in the calculation instruction file. The details will be given below.

The second acquisition unit 262 requests, from the usage log manager 240, the unit log indicating the usage log for the unit time period for which the current fee will be charged and the cumulative log indicating the usage log for the past month N indicated by the reduction terms contained in the calculation instruction file from among the usage log corresponding to the combination of the service ID (CID0001) and the user ID (UID0001) that are contained in the calculation instruction file corresponding to the first service, which is the calculation instruction file acquired by the first acquisition unit 261. The usage log manager 240 that has received the request specifies the unit log indicating the usage log for the unit time period for which the current fee will be charged and specifies the cumulative log for the month N from among the usage log corresponding to the combination of the service ID that identifies the first service and the user ID that identifies User A, and the usage log manager 240 then transmits, to the second acquisition unit 262, a file where the specified unit log (in this example, information indicating that the usage time in the unit time period is "43 hours and 30 minutes"), the service ID that identifies the first service, and the user ID that identifies User A are associated with each other and also transmits, to the second acquisition unit 262, a file where the specified cumulative log (in this example, information indicating that the usage time in the month N is "210 hours), the service ID that identifies the first service, and the user ID that identifies User A are associated with each other.

In this manner, the second acquisition unit 262 can acquire the unit log and the cumulative log corresponding to the first service. Similarly, the second acquisition unit 262 can acquire the unit log (in the example of FIG. 8, information indicating that the number of times the service has been used in the unit time period is "70 times") and the cumulative log (in the example of FIG. 8, information indicating that the number of times the service has been used in the month N is "330 times") corresponding to the second service. Similarly, the second acquisition unit 262 can acquire the unit log (in the example of FIG. 8, information indicating that the usage DISK in the unit time period is "3 gigabyte") and the cumulative log (in the example of FIG. 8, information indicating that the usage DISK in the month N is "25 gigabyte") corresponding to the third service.

The determination unit 264 then determines, for each of the calculation instruction files acquired by the first acquisition unit 261, whether the value according to the cumulative log corresponding to the service identified by the service ID contained in the calculation instruction file satisfies the reduction terms contained in the calculation instruction file. The details will be given below.

The determination unit 264 determines whether the value according to the cumulative log corresponding to the first service, which is the cumulative log acquired by the second acquisition unit 262, satisfies the reduction terms contained in the calculation instruction file corresponding to the first service, which is the calculation instruction file acquired by the first acquisition unit 261. In the example of FIG. 8, because the value according to the cumulative log corresponding to the firs service, which is the cumulative log acquired by the second acquisition unit 262, is "210 hours" and the reduction terms contained in the calculation instruction file corresponding to the first service (the first-staged reduction terms) is that the usage time in the month N exceeds 200 hours, the determination unit 264 determines that the value according to the cumulative log corresponding to the first service satisfies the reduction terms corresponding to the first service. Note that, in this example, because the second-staged reduction terms from among the reduction terms contained in the calculation instruction file corresponding to the first service are that the usage time in the month N exceeds 250 hours, the determination unit 264 determines that the value according to the cumulative log corresponding to the first service does not satisfy the second-staged reduction terms from among the reduction terms corresponding to the first service.

The determination unit 264 determines whether the value according to the cumulative log corresponding to the second service, which is the cumulative log acquired by the second acquisition unit 262, satisfies the reduction terms contained in the calculation instruction file corresponding to the second service, which is the calculation instruction file acquired by the first acquisition unit 261. In the FIG. 8 example, because the value according to the cumulative log corresponding to the second service, which is the cumulative log acquired by the second acquisition unit 262, is "330 times" and the reduction terms contained in the calculation instruction file corresponding to the second service (the first-staged reduction terms) are that the usage time in the month N exceeds 500 times, the determination unit 264 determines that the value according to the cumulative log corresponding to the second service does not satisfy the reduction terms.

Furthermore, the determination unit 264 determines whether the value according to the cumulative log corresponding to the third service, which is the cumulative log acquired by the second acquisition unit 262, satisfies the reduction terms contained in the calculation instruction file corresponding to the third service, which is the calculation instruction file acquired by the first acquisition unit 261. In the example of FIG. 8, because the value according to the cumulative log corresponding to the third service, which is the cumulative log acquired by the second acquisition unit 262, is "25 gigabyte" and the reduction terms contained in the calculation instruction file corresponding to the third service (the first-staged reduction terms) are that the usage time in the month N exceeds 40 gigabyte, the determination unit 264 determines that the value according to the cumulative log corresponding to the second service does not satisfy the reduction terms.

When the three types of services (the first service, the second service, and the third service) to which User A has subscribed includes a service for which it has been determine that the value according to the cumulative log satisfies the reduction terms, the processor 265 performs a process for reducing the value according to the unit log for each of all the services to which User A has subscribed. In the example of FIG. 8, because the value according to the cumulative log corresponding to the first service satisfies the reduction terms contained in the calculation instruction file corresponding to the first service, the processor 265 performs, for each of the multiple services to which User A has subscribed, a process for reducing the value according to the unit log corresponding to the service. More specifically, the processor 265 performs, for each of the multiple services to which User A has subscribed, a process for reducing the value according to the unit log corresponding to the service in accordance with the reduction information contained in the calculation instruction file corresponding to the first service.

In the example of FIG. 8, because the reduction information contained in the calculation instruction file corresponding to the first service indicates that the value according to the unit log is reduced by 10% when the first-staged reduction terms are satisfied, the processor 265 performs a process for reducing, by 10%, the value according to the unit log corresponding to the first service, which is the unit log acquired by the second acquisition unit 262. Accordingly, the value according to the unit log corresponding to the first service, which is the value used to calculate the current fee, (the reduced usage time) is "39 hours and 9 minutes". The processor 265 also performs a process for reducing, by 10%, the value according to the unit log corresponding to the second service, which is the unit log acquired by the second acquisition unit 262. Accordingly, the value according to the unit log corresponding to the second service, which is the value used to calculated the current fee, (the reduced number of times the service has been used) is "63 times". Furthermore, the processor 265 also performs a process for reducing, by 10%, the value according to the unit log corresponding to the third service, which is the unit log acquired by the second acquisition unit 262. Accordingly, the value according to the unit log corresponding to the third service, which is the value used to calculate the current fee, (the reduced usage DISK) is "2.7 gigabytes". The following process performed by the calculator 266 is the same as that of FIG. 4.

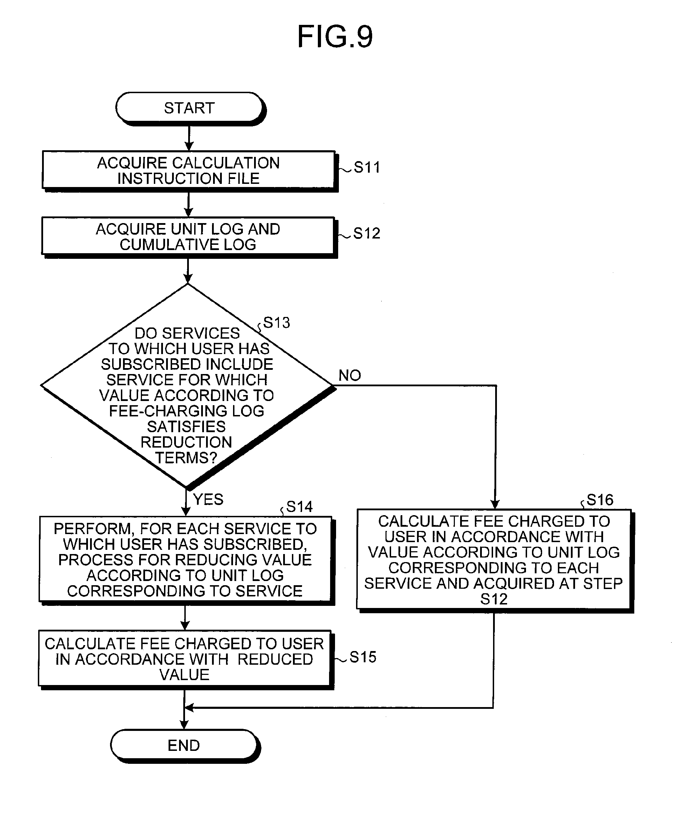

FIG. 9 is a flowchart of exemplary processes performed by the fee calculator 260 of the second embodiment. As shown in FIG. 9, the first acquisition unit 261 acquires, for each of multiple services to which a user has subscribed, a calculation instruction file corresponding to the service from the subscription manager 250 (step S11). The second acquisition unit 262 then specifies, for each of the calculation instruction files acquired by the first acquisition unit 261, the service ID and the user ID contained in the calculation instruction file and requires, from the usage log manager 240, a unit log and a cumulative log corresponding to the combination of the specified service ID and user ID. The second acquisition unit 262 the acquires (receives) the requested unit log and cumulative log from the usage log manager 240 (step S12).

It is then determined, for each of the calculation instruction files acquired by the first acquisition unit 261, whether the value according to the cumulative log corresponding to the service identified by the service ID contained in the calculation instruction file, which is the cumulative log acquired by the second acquisition unit 262, satisfies the reduction terms contained in the calculation instruction file. When the multiple services to which the user has subscribed include a service for which it has been determined that the value according to the cumulative log satisfies the reduction terms (YES at step S13), the processor 265 performs, for each of the multiple services to which the user has subscribed, a process for reducing the value according to the unit log corresponding to the service (step S14). The calculator 266 then calculates the fee charged to the user on the basis of the value that has been reduced by the processor 265 (step S15).

In contrast, when the multiple services to which the user has subscribed does not include any service for which it has been determined that the value according to the cumulative log satisfies the reduction terms (NO at step S 13), the processor 265 does not perform a process for reducing the value according to the unit log of each of the multiple services to which the user has subscribed and passes the unit log corresponding to each service, which is the unit log acquired by the second acquisition unit 262, to the calculator 266. The calculator 266 then calculates the fee charged to the user in accordance with the unit log corresponding to each service, which is the unit log passed by the processor 265, i.e., in accordance with the value according to the unit log corresponding to each service, which is the unit log acquired at step S12 (step S16).

Embodiments according to the present invention have been described above, but the invention is not limited to the above-described embodiments and it can be embodied when carried out by modifying the components within the scope of the invention. Furthermore, various inventions can be formed by using appropriate combinations from among the components disclosed in all the embodiments. For example, the components shown in the embodiments can be partly omitted. Furthermore, the components over different embodiments may be combined as and when necessary.

Such modifications will be described below.

### (1) Modification 1

In the above-described embodiments, when it is determined that it is time to charge the fee to the user in accordance with the subscription terms associated with the user and registered in the subscription information storage unit 251, the subscription manager 250 creates, for each of multiple services to which the user has subscribed, a calculation instruction file giving an instruction for calculating the fee for the service and transmits the created calculation instruction file to the fee calculator 260. Alternatively, for example, a mode may be employed where, upon receiving the request for issuing a bill from the user, the subscription manager 250 creates, for each of the multiple services to which the user has subscribed, a calculation instruction file giving an instruction for calculating the fee for the service and transmits the created calculation instruction files to the fee calculator 260. In this mode, the time period corresponding to the time period from the time when the previous request for issuing a bill was received to the time when the current request for issuing a bill was received can be considered as the above-described unit time period.

### (2) Modification 2

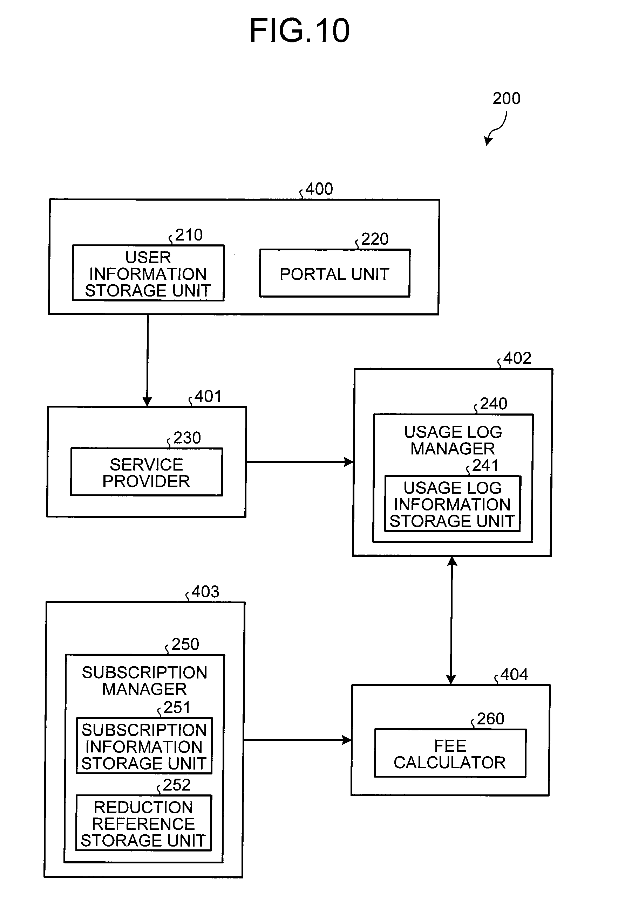

Furthermore, a mode may be employed where the functions of the units of the server device 200 may be implemented by different server devices. For example, as shown in FIG. 10, the server device 200 may include a first server device 400 implementing the function of the portal unit 220, a second server device 401 implementing the function of the service provider 230, a third server device 402 implementing the function of the usage log manager 240, a fourth server device 403 implementing the function of the subscription manager 250, and a fifth server device 404 implementing the function of the fee calculator 260. In the example of FIG. 10, the first server device 400, the second server device 401, the third server device 402, the fourth server device 403, and the fifth server device 404 are configured to be communicable to each other.

### (3) Modification 3

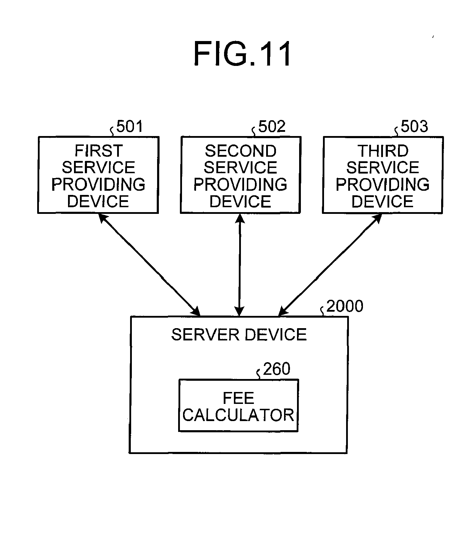

For example, a mode may be employed where, in addition to the server device implementing the function of the fee calculator 260, a service providing device is provided that implements the functions other than fee calculation, i.e., implements authentication of the user to which the services are provided, provision of the services, management of the service usage (usage log management), subscription management, etc. FIG. 11 is a diagram of an exemplary mode where, in addition to a server device 2000 implementing the function of the fee calculator 260, provided are a first service providing device 501 providing a first service, a second service providing device 502 providing a second service providing, and a third service providing device 503 providing a third service.

In short, it is satisfactory if the information processing system according to the invention is in a mode where it includes a first acquisition unit, a second acquisition unit, determination unit, and a processing unit. The first acquisition unit acquires, for each of multiple services to which a user has subscribed, first information containing reduction terms that are terms for reducing the fee for the service. The second acquisition unit acquires, for each of the multiple services to which the user has subscribed, second information indicating the service usage. The determination unit determines, for each of the multiple services to which the user has subscribed, whether the value according to the second information corresponding to the service satisfies the reduction terms corresponding to the service. When the multiple services to which the user has subscribed include a service for which it has been determined that the value according to the second information satisfies the reduction terms, the processor performs, for each of the services, a process for reducing the fee for the service.

### (4) Modification 4

For example, the first embodiment may be in a mode where, for each of the services (the first service, the second service, and the third service), multi-staged reduction terms and their corresponding multi-staged reduction information may be set. For example, reduction terms at three stages like those of the second embodiment and reduction information at three stages corresponding to the three stages of reduction terms, respectively, may be set for each service.

### (5) Modification 5

For example, in the first embodiment, when the value according to the fee-charging log corresponding to any one of the first service, the second service, and the third service satisfies the reduction terms contained in the calculation instruction file corresponding to that service, instead of using the reduction information corresponding to that service for all other services, reduction information corresponding to other services may be used for other services. When, as in the example of FIG. 4, the value according to the fee-charging log corresponding to the first service satisfies the reduction terms corresponding to the first service, reduction information corresponding to the second service (the value according to the usage log for the unit time period is reduced by 13%) may be used for the value according to the usage log corresponding to the second service and reduction information corresponding to the third service (the value according to the usage log for the unit time period is reduced by 12%) may be used for the value according to the usage log corresponding to the third service. In this case, not a fixed rate (%) but a fixed value (fixed amount (yen) or a fixed log (time, the number of times, volume, etc.)) may be subtracted.

Similarly, in the second embodiment, when the value according to the cumulative log corresponding to any one of the first service, the second service, and the third service satisfies the reduction terms at any stage contained in the calculation instruction file corresponding to the service, instead of using reduction information corresponding to the reduction terms satisfied for that service, reduction information corresponding to other services may be used for other services. For example, as in the example of FIG. 8, when the value according to the cumulative log corresponding to the first service satisfies first-staged reduction terms corresponding to the first service, first-staged reduction information corresponding to the second service (indicating that the value according to the unit log is reduced by 13%) may be used for the value according to the cumulative log corresponding to the second service and first-staged reduction information corresponding to the third service (indicating that the value according to the unit log is reduced by 15%) may be used for the value according to the cumulative log corresponding to the third service.

### (6) Modification 6

In the first embodiment, when the value according to the fee-charging log corresponding to, for example, the second service, in addition to that of the first service satisfies, satisfies the reduction terms corresponding to the second service, reduction information corresponding to the first service is used and then reduction information corresponding to the second service is used for the value according to the usage log corresponding to each service. Alternatively, for example, a mode may be employed where reduction information according to the number of services for which the reduction terms are satisfied is previously stored in at least one calculation instruction file. For example, the calculation instruction file corresponding to the first service may contain reduction information (first reduction information) used when the reduction terms corresponding to the first service are satisfied, reduction information (second reduction information) used when the reduction terms corresponding to the first service and reduction terms corresponding to the second service and the third service are satisfied, and reduction information (third reduction information) used when the reduction terms corresponding to each of the first service, the second service, and the third service are satisfied. The same method as that described above may be applied to the second embodiment.

### (7) Modification 7

In the first and the second embodiments, the value according to the fee-charging log (cumulative log in the second embedment) corresponding to one service satisfies the reduction terms corresponding to the service, reduction information is used for all the services. Alternatively, for example, a mode may be employed where reduction information is used for only a part of the services. For example, when the value according to the fee-charging log (cumulative log in the second embedment) corresponding to the first service satisfies the reduction terms corresponding to the first service, reduction information may be used for the first service and the second service except for the third service. An arbitrary method of selecting services for which reduction information will be used may be set. For example, a given number of services ranked in the top according to the amount of fee to be charged may be selected as services to which reduction information is used.

Each of the above-described embodiments and modifications may be combined arbitrarily.

The various programs executed by the server device 200 may be configured so as to be recorded in an installable or executable file in a computer-readable storage medium, such as a CD-ROM, a flexible disk (FD), a CD-R, DVD (Digital Versatile Disk), a USB (Universal Serial Bus) and may be configured so as to be provided or distributed via a network, such as the Internet. Alternatively, such various programs may be stored in a ROM etc. and provided.

According to the embodiments, for each of multiple services to which a user has subscribed, discounts related to other services can be automatically applied.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An information processing system (1), comprising:
a first acquisition unit (261) configured to acquire pieces of first information for a plurality of services, respectively, each piece of first information containing reduction conditions for reducing a fee for the corresponding service;
a second acquisition unit (262) configured to acquire pieces of second information for the plurality of services, respectively, each piece of second information indicating a usage of the corresponding service;
a determination unit (264) configured to determine whether a value according to the piece of second information corresponding to the service satisfies the reduction conditions for each of the plurality of services; and
a processor (265) configured to perform a process for reducing the fee for the service on each of the plurality of services when the plurality of services include a service for which it is determined that the value according to the piece of second information satisfies the reduction conditions.

2. The information processing system (1) according to claim 1, wherein the processor (265) is configured to perform a process for reducing the value according to the piece of second information corresponding to the service on each of the plurality of services when the plurality of services include a service for which it is determined that the value according to the piece of second information satisfies the reduction conditions.

3. The information processing system (1) according to claim 1 or 2, wherein
each piece of first information contains a piece of reduction information indicating how to reduce the fee when the reduction conditions are satisfied, and
the processor (265) is configured to perform a process for reducing the fee for the service on each of the plurality of services in accordance with the piece of reduction information corresponding to the service for which it is determined that the value according to the piece of second information satisfies the reduction conditions when the plurality of services include a service for which it is determined that the piece of second information satisfies the reduction conditions.

4. The information processing system (1) according to any one of claims 1 to 3, wherein the processor (265) is configured to perform, on each of the plurality of services, a process for increasing a volume by which the fee for the service is reduced in accordance with an increase in the number of services for which the value according to the piece of second information satisfies the reduction conditions.

5. The information processing system (1) according to any one of claims 1 to 4, wherein the reduction conditions are that the value according to the piece of second information for a unit time period corresponding to a time period for which the fee will be charged to a user exceeds a given threshold.

6. The information processing system (1) according to any one of claims 1 to 5, wherein the reduction conditions are that the value according to the piece of second information for a past given time period exceeds a given threshold.

7. An information processing method, comprising:
acquiring pieces of first information for a plurality of services, respectively, each piece of first information containing reduction conditions for reducing a fee for the corresponding service;
acquiring pieces of second information for the plurality of services, respectively, each piece of second information indicating a usage of the corresponding service;
determining whether a value according to the piece of second information corresponding to the service satisfies the reduction conditions for each of the plurality of services; and
performing a process for reducing the fee for the service on each of the plurality of services when the plurality of services include a service for which it is determined that the value according to the piece of second information satisfies the reduction conditions.

8. A computer-readable storage medium with an executable program stored thereon, wherein the program instructs a computer to perform:
acquiring pieces of first information for a plurality of services, respectively, each piece of first information containing reduction conditions for reducing a fee for the corresponding service;
acquiring pieces of second information for the plurality of services, respectively, each piece of second information indicating a usage of the corresponding service;
determining whether a value according to the piece of second information corresponding to the service satisfies the reduction conditions for each of the plurality of services; and
performing a process for reducing the fee for the service on each of the plurality of services when the plurality of services include a service for which it is determined that the value according to the piece of second information satisfies the reduction conditions.
